# EUROPEAN PATENT APPLICATION

(11) **EP 1 335 172 A1**
(43) Date of publication of application: **13.08.2003**
(21) Application number: 01981038.1
(22) Date of filing: 09.11.2001
(51) Int. Cl.: F28D 15/02, B23K 20/00, B23K 20/24

(54) **HOLLOW LAMINATE AND HEAT SINK USING THE SAME**

(30) Priority: 13.11.2000 JP 2000344643
(71) Applicant: Toyo Kohan Co., Ltd., Tokyo 102-8447 (JP)
(72) Inventor: SAIJO, Kinji, c/o TOYO KOHAN CO., LTD., Kudamatsu-shi, Yamaguchi 744-8611 (JP); KAWAMURA, Tsuguo, c/o TOYO KOHAN CO., LTD, Kudamatsu-shi, Yamaguchi 744-8611 (JP); OHSAWA, Shinji, c/o TOYO KOHAN CO., LTD, Kudamatsu-shi, Yamaguchi 744-8611 (JP); OKAMOTO, Hiroaki, c/o TOYO KOHAN CO., LTD, Kudamatsu-shi, Yamaguchi 744-8611 (JP); YOSHIDA, Kazuo, c/o TOYO KOHAN CO., LTD, Kudamatsu-shi, Yamaguchi 744-8611 (JP)
(74) Representative: VOSSIUS & PARTNER
(86) International application number: JP0109797
(87) International publication number: WO02039046

(57) **Abstract**

A hollow laminate which is prepared by forming hollow portions of a predetermined shape on opposed faces of a plurality of metal plates, subjecting the joining faces of the metal plates to an activation treatment under an extremely reduced pressure, and then laminating the metal plates having hollow portions and joining them by cold pressure welding; and a heat sink which is prepared by enclosing water as a heat radiating hydraulic fluid in the hollow portion of the hollow laminate

## Description

### TECHNICAL FIELD

The present invention relates to a heat sink for heat radiation or the like in MPU of personal computers, etc., and to a hollow laminate for the heat sink.

### BACKGROUND ART

High-quality computer devices such as MPU of personal computers are making rapid progress. For realizing such high-quality devices, needed are heat radiators capable of efficiently radiating heat from MPU, etc.

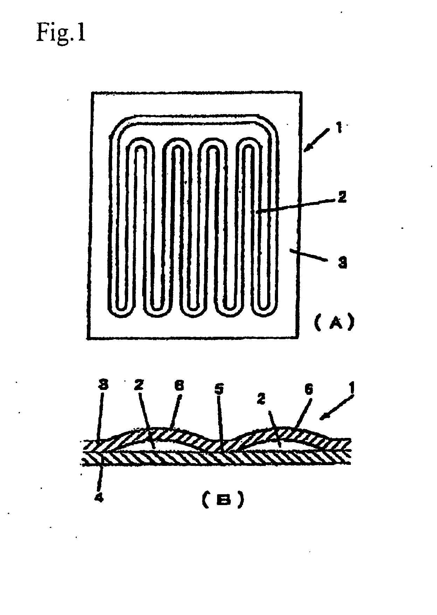

For such heat radiators, a plate-type heat pipe for thermal diffusers has been proposed recently, which is fabricated by laminating and bonding under pressure a plurality of aluminum alloy plates with a small-diameter tunnel being made to meander in the interface between the laminated plates according to a roll-bonding method, followed by enclosing flon 134a or the like as a working hydraulic fluid in the tunnel (JP-A 10-185465). As in Fig. 1 (A) and (B), the plate-type heat pipe 1 is fabricated by laminating two thin metal plates 3 and 4 and bonding them through hot rolling, while a predetermined pattern of a bonding inhibitor is previously formed in the interface between the metal plates so that the patterned route of the non-bonded interface between them is expanded to be the above-mentioned, meandering small-diameter tunnel 2. Much increasing the number of the meandering turns per the unit width of the tunnel results in the increase in the heat-radiating performance of this device.

However, the heat radiators with the conventional plate-type heat pipe as above have some problems in that they could not meet the recent requirement of the restrictions on the use of flon coolants for environmental protection and, in addition, their heat-radiating efficiency could not follow the further advanced performance of MPU. Another problem with them is that, since the thin metal plates are bonded through hot rolling, the mother material for them is significantly deformed and therefore the hollow portion could not be accurately formed and, in addition, the bonding strength is lowered owing to the alloying of hetero metals in the bonding faces. Still another problem is that the coating with the bonding inhibitor may be uneven and the boundary between the bonded part and the non-bonded part could not be formed accurately and, in addition, some superfluous step for washing away the bonding inhibitor is needed, but even though washed, the bonding inhibitor could not be completely removed.

In view of the technical background as above, an object of the present invention is to provide a heat sink for heat radiators and others, which is free from any environmental restrictions and is lightweight and which is effective for more improving heat radiation efficiency, and to provide a hollow laminate for the heat sink.

### DISCLOSURE OF THE INVENTION

The hollow laminate of claim 1 of the present invention is fabricated by laminating and bonding a plurality of metal plates with forming a hollow portion of a predetermined shape on the opposite faces of the neighboring metal plates, which is characterized in that the bonding faces of the metal plates are previously activated in a vacuum chamber and thereafter the metal plates are laminated and bonded in such a manner that their activated faces are opposite to each other and are bonded by cold pressure welding. Preferably, the activation is effected by sputter-etching in an inert gas atmosphere under an extremely reduced pressure of from 1 x 10⁻³ to 10 Pa in such a manner that an alternating current of from 1 to 50 MHz is applied between the metal plate serving as one earthed electrode A and another insulated electrode B for glow discharging therebetween and the area of the electrode A exposed out in the plasma formed by the glow discharging is at most 1/3 of the area of the electrode B. Also preferably, at least one of the plural metal plates has a recess portion of a predetermined shape, and the other metal plate is laminated and bonded thereto so as to surround the recess portion to thereby form the hollow portion of a predetermined shape. Also preferably, the hollow portion of the hollow laminate is in the form of a tunnel. Also preferably, the metal plates are copper plates or copper alloy plates.

Also preferably, at least one of the metal plates is a two-layered laminate of bonded metal plates, the metal plate on the side of the hollow portion is a copper plate or a copper alloy plate, and the metal plate isolated from the hollow portion is an aluminum plate or an aluminum alloy plate.

Also preferably, the thickness of the copper plate or the copper alloy plate is from 0.01 to 1.5 mm, and the thickness of the aluminum plate or the aluminum alloy plate is from 0.05 to 1.0 mm.

The heat sink of the invention is characterized in that a heat sink hydraulic fluid is enclosed in the hollow portion of the hollow laminate.

Preferably, the hydraulic fluid in the heat sink of the invention is water.

### BRIEF DESCRIPTION OF THE INVENTION

Fig. 1 shows a conventional plate-type heat pipe; (A) is a schematic plan view, and (B) is a schematic cross-sectional view.

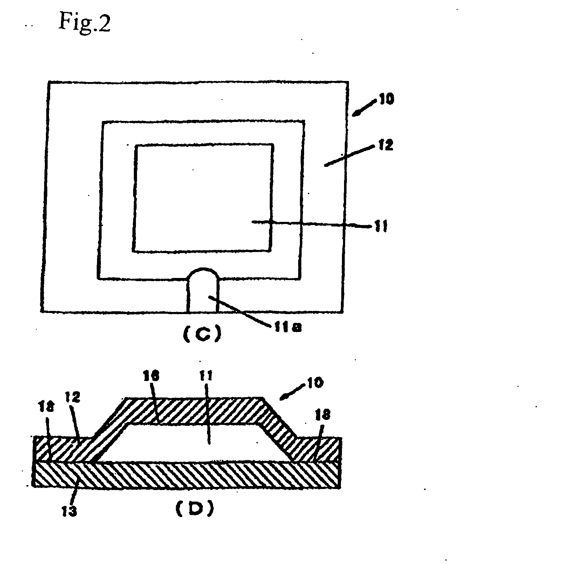

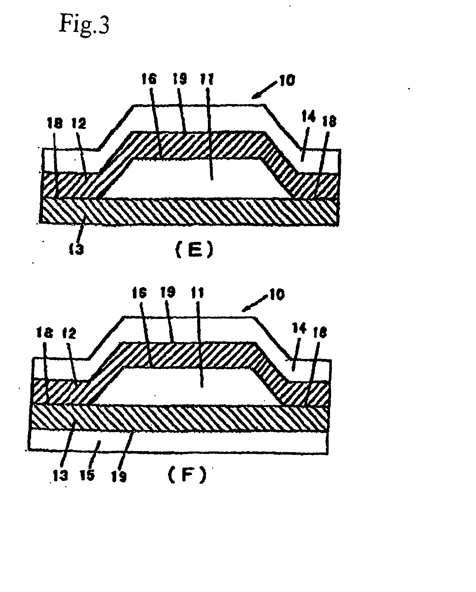

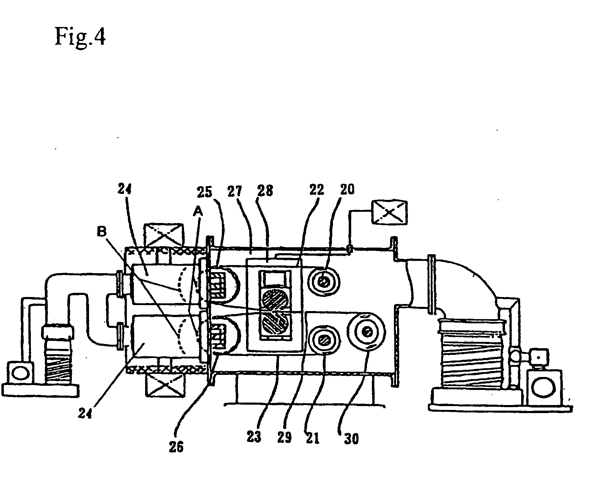

Fig. 2 shows one embodiment of the hollow laminate of the invention; (C) is a schematic plan view, and (D) is a schematic cross-sectional view. Fig. 3 shows other embodiments of the hollow laminate of the invention; (E) is a schematic cross-sectional view of another embodiment, and (F) is a schematic cross-sectional view of another embodiment. Fig. 4 is a schematic cross-sectional front view of an apparatus for producing metal plates to be laminated and bonded in the invention.

### BEST MODES OF CARRYING OUT THE INVENTION

Fig. 2 shows one embodiment of the hollow laminate of the invention; (C) is a schematic plan view, and (D) shows an example of two metal plates to form a hollow portion therebetween. Fig. 3 shows other embodiments of the hollow laminate of the invention; (E) shows an example of further laminating and bonding another metal plate to one side of the hollow portion formed by two metal plates, and (F) shows an example of further laminating and bonding another metal plate to both sides of the hollow portion formed by two metal plates.

In the hollow laminate 10 in Fig. 2(C), 11 is a hollow portion. As in (D), the hollow portion 11 is formed by pressing or rolling at least one of two metal plates to form a recess portion to be the hollow portion, then activating the opposite faces of the two metal plates and laminating and boding the two metal plates to form the hollow portion.

Concretely, two metal plates are copper plates 12, 13. For the material for the copper plates, usable are copper or copper alloy plates. The copper alloy plates include, for example, C1000 series or C2000 series copper alloys as the alloy number indicated in JIS H-3100, as well as brass, free-cutting brass, tin-containing brass, admiralty brass, naval brass, aluminum bronze, cupronickel, etc. From the viewpoint of the thermal conductivity, pure copper is preferred. Also preferably, the thickness of the copper plate is from 0.01 to 1.5 mm. If its thickness is smaller than 0.01 mm, it could not produce satisfactory strength and corrosion resistance; but if larger than 1.5 mm, it will be too heavy. At least any one of the copper plates is pressed or rolled in accordance with the pattern of the plan profile of the hollow portion 11 to thereby form a recess portion therein. The metal plate may be rolled as follows: One roll is worked to have a projection on its surface in accordance with the profile of the hollow portion, while the other roll is worked to have a recess that engages with the projection, and a metal plate is passed between the thus-synchronized rolls to thereby form a recess portion in the metal plate. The metal plate is thus worked to have a recess portion to be the hollow portion and a scheduled bonding portion to be a bonded portion. In this stage, the metal plate may be cut to have a predetermined size and then the recess portion may be formed therein; or it may be first worked to have the recess portion and then cut to have a predetermined size. Next, this is activated in the manner mentioned below.

The activation may be effected as follows: The copper plates 12 and 13, at least any one of which has been worked to have a recess portion, are charged in a vacuum chamber and held in a predetermined condition. The copper plates 12 and 13 that individually serve as one earthed electrode A are combined with the other insulated electrode B, and an alternating current of from 1 to 50 MHz is applied between them in an inert gas atmosphere, preferably in argon gas, under an extremely reduced pressure of from 1 x 10⁻³ to 10 Pa for glow discharging therebetween and the copper plates are sputter-etched in such a manner that the area of the electrode A exposed out in the plasma formed by the glow discharging is at most 1/3 of the area of the electrode B. Through the sputter-etching, the impurities such as metal oxides, dust deposits, oil and others having deposited on the metal plates are removed, and the adhesiveness of the metal plates to other metal plates in the subsequent pressure welding step may be improved. If the inert gas pressure is lower than 1 x 10⁻³ Pa, stable glow discharging will be difficult to attain and high-speed etching will also be difficult to attain; but if higher than 10 Pa, the activation efficiency will lower. If the alternating current to be applied is lower than 1 MHz, stable glow discharging will be difficult to maintain and continuous etching will be difficult to attain; but if higher than 50 MHz, the system will readily oscillate and the power supply line will be unfavorably complicated. For efficiently etching, the area of the electrode A must be smaller than that of the electrode B, and when the former is at most 1/3 of the latter, satisfactorily efficient etching will be possible.

Next, the two metal plates are laminated and bonded in the manner mentioned below. Specifically, the copper plates 12, 13 are joined in such a manner that the recess portion formed in any one or both of the two may form a hollow portion and the activated faces may be opposite to each other, and they are laminated and bonded by cold pressure welding at the scheduled bonding portion to be a bonded portion. The cold pressure welding may be effected by pressing or rolling. Concretely, a recess portion that corresponds to the profile of the hollow portion is formed in the pressure-welding faces, and the scheduled bonding portion alone may be welded. In this stage, the lamination bonding may be effected at a low temperature and a low reduction ratio, and it receives few or no negative influences of tissue change, alloying, breakage and the like on the metal plates and on the laminated and bonded portion like those in hot pressure welding or high-reduction pressure welding. In addition, the hollow laminate may be prevented from being so much deformed or elongated, and the hollow portion therein may be shaped and worked accurately. In the method of the invention, the temperature of the metal plate is indicated by T (°C) , and the reduction ratio is by R (%). Preferably, T is not higher than 300°C, more preferably 0°C < T ≤ 300°C. If the temperature is higher than 300°C, it is unfavorable since an alloy layer will be formed in the bonding interface and the bonding strength will lower. Also preferably, R is at most 30 %, more preferably from 0.1 to 30 %. If R is higher than 30 %, it is unfavorable since the material will be much deformed.

Through the lamination bonding as above, the scheduled bonding portion alone is bonded under pressure with no negative influence on the hollow portion to be formed. In that manner, the hollow portion 11 is formed. According to the process mentioned above, the hollow laminate 10 having a hollow portion 11 of the invention is fabricated. In the vacuum chamber, not only a pair of metal plates but also plural pairs of metal plates may be charged for batch treatment. The metal plates to be paired are conveyed into an activation zone, in which they are fixed while their faces to be processed are kept or held vertically or horizontally to be opposite to or in parallel to each other. In case where the unit to hold the metal plates is to act also as a pressure unit, the activated metal plates may be directly welded under pressure while they are held by the holding unit. If not so, the metal plates are conveyed to a welding unit and may be welded by it under pressure.

The heat sink of the invention may be fabricated as follows: The hollow laminate is formed in the manner as above, its inside is degassed via its mouth 11a to be in vacuum or under reduced pressure, a predetermined amount of a heat sink hydraulic fluid is introduced thereinto via the mouth, and the mouth is sealed up by welding or the like. The heat sink hydraulic fluid is an easily handlable one, preferably water, pure water or ultra-pure water from the viewpoint of no flon necessity. In that manner, the heat sink of the invention is fabricated.

As in Fig. 3(E), the metal plate to form one side of the hollow portion may be a two-layered metal laminate that is prepared by laminating and bonding an aluminum plate 14 to a copper plate 12. In this case, a copper plate 12 and an aluminum plate 14 are previously laminated and bonded to prepare a laminate metal plate, and thereafter the laminate metal plate is combined with a copper plate 13 with its copper plate 12 facing the copper plate 13, and fabricated into a hollow laminate in the manner as above.

As in Fig. 3(F), the metal plates to form both sides of the hollow portion may be two-layered metal laminates that are prepared by laminating and bonding copper plates 12 and 13 to aluminum plates 14 and 15, respectively. Also in this case, copper plates 12 and 13 are laminated and bonded to aluminum plates 14 and 15, respectively, to prepare laminate metal plates, and thereafter these two, two-layered laminate metal plates are combined with their copper plates facing each other, and fabricated into a hollow laminate in the manner as above.

The copper or copper alloy plates are used herein as their corrosion resistance to water is high. The copper-aluminum laminate metal plates are used herein as they could be more lightweight than copper alone and their relative strength could be increased. For the material for the aluminum plates, usable are aluminum or aluminum alloy plates. The aluminum alloy plates include, for example, 2000 series, 3000 series, 5000 series, 6000 series or 7000 series aluminum alloys as the alloy number in JIS H-4000 or 4160. Preferably, the thickness of the copper plate in the laminate metal plates is from 0.01 to 1.5 mm. If its thickness is smaller than 0.01 mm, it could not produce satisfactory corrosion resistance; but if larger than 1.5 mm, it will be too heavy, and it will not require reinforcing through lamination bonding in view of its strength. Also preferably, the thickness of the aluminum or aluminum alloy plate in these is from 0.05 to 1.0 mm. If its thickness is smaller than 0.05 mm, it could not produce satisfactory strength; but if larger than 1.0 mm, it is too heavy and is therefore unfavorable.

Next described is one example of a method for producing two-layered laminate metal plates for use in the invention, with reference to the copper-aluminum bonding as in Fig. 3 (E) or (F). In the apparatus for producing laminate metal plates of Fig. 4, a copper plate material 22 and an aluminum plate material 23 are unwound from unwinding reels 20 and 21, respectively, and partly sputter-etched and activated in an etching chamber 24 under the condition mentioned above. Next, by the rolling unit 28 disposed inside a vacuum chamber 27, the plates are cold rolled under the condition mentioned above and are thus integrated into a laminate metal plate 29, which is then wound up around the winding reel 30.

Copper-copper bonding may be attained by substituting the aluminum plate material 23 in the previous description with a copper plate material. Bonding for forming the hollow portion or for forming the laminate metal plates may be copper-copper bonding, copper-aluminum bonding, and also aluminum-aluminum bonding, metal plate-laminate metal plate bonding, laminate metal plate-laminate metal plate bonding, and even bonding of different metal plates.

Before the sputter-etching processing in the apparatus of Fig. 4, an additional processing may be provided in which metal plates are worked to form a recess portion to give a hollow portion of a predetermined pattern, and the roll portion of the apparatus of Fig. 4, that is, the electrode rolls and the rolling unit rolls are so modified as to have a recess portion that corresponds to the profile of the hollow portion whereby only the scheduled bonding potion of the metal plates that have a recess portion of a predetermined pattern corresponding to the profile of the hollow portion may be bonded and laminated in the manner as above with no negative influences on the recess portion of the metal plates to give laminate metal plates having a hollow portion of a desired profile. In place of the winding roll portion, a cutting unit of cutting the laminate metal plates into pieces of a predetermined size may be provided.

The cold rolling unit in the vacuum chamber may be substituted with a pressing unit and the like also to attain the bonding lamination. In this case, the pressing mold may be provided with a recess portion that corresponds to the profile of the hollow portion as in the rolls, whereby only the scheduled bonding portion may be bonded. Further, after the recess portion to be the hollow portion has been formed therein, the metal plates such as copper plates may be sputter-etched, then cut into pieces of a predetermined size and then laminated, and thereafter these may be laminated and bonded by pressing them.

After the metal plates have been worked to form a recess portion to be the hollow portion, they may be cut, then sputter-etched, laminated and bonded to carry out the bonding lamination to form the hollow portion. After the metal plates such as copper plates have been cut into pieces of a predetermined size, they may be worked to have a recess portion to be the hollow portion, then sputter-etched, laminated and bonded also to carry out the bonding lamination to form the hollow portion. In that case where the metal plates are first cut and then sputter-etched, if desired, the metal plates may act as one insulated electrode A relative to the other earthed electrode B, and they may be activated between the two electrodes.

In the embodiment of the heat sink that comprises the hollow laminate fabricated in the manner as above, a heat source is attached to the flat part of the face or the back of the heat sink. When this is applied to MPU of computers, it produces excellent cooling effect. In the embodiment, the hollow portion has a square profile, but is not limited to it. For example, it may be roundish such as semicircular, and may be planned in any desired manner to have any other profile at high degree of freedom. Moreover, the hollow portion is not limited to only the profile of having a recess portion on one face alone. If desired, a recess portion may be formed on both the opposite faces of the metal plates, or on both the face and the back of the metal plates, and both the recess portions thus formed may have the same profile or different profiles. In those cases, both the recess portions on the face and the back of the metal plates may be formed in the same direction or in different directions so far as they can form a hollow portion when combined. If desired, a reinforcing material or the like to prevent deformation may be inserted into the hollow portion. Also if desired, the hollow portion may be partly or entirely in the form of a tunnel, and the tunnel-shaped hollow portion may have draw portions on both sides in the cross direction thereof. In this, the draw portions act to hold the heat sink hydraulic fluid owing to their capillary action. Having these, the heat sink may exhibit its heat-radiating capability, not influenced by its posture.

### EXAMPLES

Examples are described below.

### (Example 1)

A copper plate having a thickness of 130 µm and an aluminum plate having a thickness of 120 µm were prepared for metal plates.

### <1> Activation:

The copper plate 22 unwound from the metal plate unwinding reel 20, and the aluminum plate 23 unwound from the metal plate unwinding reel 21 were wound around the electrode rolls 25 and 26 in the etching chamber 24, and the copper plate 22 and the aluminum plate 23 were activated on one surface according to a sputter-etching process.

### <2> Pressure welding:

The copper plate 22 and the aluminum plate 23 of which the surface had been activated were then led in the next rolling unit 28, in which the activated faces were welded under pressure to a low reduction ratio of 0.5 % to obtain a copper plate/aluminum plate laminate.

### <3> Pressing:

The copper plate/aluminum plate laminate thus obtained was cut into tabular pieces, and then pressed to form a projection as in Fig. 2(D) and Fig. 3(E) by the use of a punch from the side of the copper plate. The process formed the hollow portion 11.

### <4> Activation:

The copper plate side of the copper plate/aluminum plate laminate that had been worked to have the hollow portion 11, and a copper plate having a thickness of 100 µm were activated according to a sputter-etching process.

### <5> Pressure welding:

Still in the activation atmosphere in <4>, the activated plates were directly welded under pressure to a reduction ratio of 0.5 % by the use of a pressing unit, at the bonding portion 18 of the copper plate side of the copper plate/aluminum plate laminate with the activated face of the copper plate having a thickness of 100 µm.

The process gave a hollow laminate of copper plate/copper plate/aluminum, which has a hollow portion in the copper plate/aluminum plate laminate thereof.

Pure water that serves as a heat sink hydraulic fluid was enclosed in the hollow portion of the hollow laminate to give a heat sink.

### INDUSTRIAL APPLICABILITY

As described hereinabove, the hollow laminate of the invention is fabricated by forming a recess portion in at least one of a plurality of neighboring metal plates, activating the opposite faces of the metal plates with the recess portion formed and a different metal plate, and joining them so that the activated faces are opposite to each other, and welding them in a mode of cold pressure welding to a low reduction ratio to form a hollow portion. The heat sink of the invention is fabricated by enclosing a heat sink hydraulic fluid in the hollow portion. In place of a flon-type coolant, water may be enclosed as the heat sink hydraulic fluid, and the heat sink is friendly to the environment and its heat-radiating efficiency may be increased. In addition, since thin metal plates are welded under pressure to a low reduction ratio, the profile of the hollow laminate can be controlled accurately and the weight thereof may be reduced.

## Claims

1. A hollow laminate fabricated by laminating and bonding a plurality of metal plates with forming a hollow portion of a predetermined shape on the opposite faces of the neighboring metal plates, which is **characterized in that** the bonding faces of the metal plates are previously activated in a vacuum chamber and thereafter the metal plates are laminated and bonded in such a manner that their activated faces are opposite to each other and are bonded by cold pressure welding.

2. The hollow laminate as claimed in claim 1, wherein the activation is effected by sputter-etching in an inert gas atmosphere under an extremely reduced pressure of from 1 x 10⁻³ to 10 Pa in such a manner that an alternating current of from 1 to 50 MHz is applied between the metal plate serving as one earthed electrode A and another insulated electrode B for glow discharging therebetween, and the area of the electrode A exposed out in the plasma formed by the glow discharging is at most 1/3 of the area of the electrode B.

3. The hollow laminate as claimed in claim 1 or 2, wherein at least one of the plural metal plates has a recess portion of a predetermined shape, and the other metal plate is laminated and bonded thereto so as to surround the recess portion to thereby form the hollow portion of a predetermined shape.

4. The hollow laminate as claimed in any of claims 1 to 3, wherein the hollow portion has a tunnel portion.

5. The hollow laminate as claimed in any of claims 1 to 4, wherein the metal plates are copper plates or copper alloy plates.

6. The hollow laminate as claimed in any of claims 1 to 5, wherein at least one of the metal plates is a two-layered laminate of bonded metal plates, the metal plate on the side of the hollow portion is a copper plate or a copper alloy plate, and the metal plate isolated from the hollow portion is an aluminum plate or an aluminum alloy plate.

7. The hollow laminate as claimed in claim 6, wherein the thickness of the copper plate or the copper alloy plate is from 0.01 to 1.5 mm, and the thickness of the aluminum plate or the aluminum alloy plate is from 0.05 to 1.0 mm.

8. A heat sink **characterized in that** a heat sink hydraulic fluid is enclosed in the hollow portion of the hollow laminate of any of claims 1 to 7.

9. The heat sink as claimed in claim 8, wherein the heat sink hydraulic fluid is water.
